# EUROPEAN PATENT APPLICATION

(11) **EP 4 431 410 A1**
(43) Date of publication of application: **18.09.2024**
(21) Application number: 24157713.9
(22) Date of filing: 14.02.2024
(51) Int. Cl.: B65D 19/44, B65D 85/68, B62D 65/18

(54) **RACK SYSTEM FOR SUPPORTING AND TRANSPORTING VARIOUS ARTICLES**

(30) Priority: 13.03.2023 GB 202303631
(71) Applicant: Caterpillar, Inc., Peoria, IL 61629-6450 (US)
(72) Inventor: FERNANDEZ, Eric, 38190 Froges (FR); FINET, Alexandre, 38260 La Cote Saint Andre (FR)
(74) Representative: Boult Wade Tennant LLP

(57) **Abstract**

A rack system (100) for supporting and transporting various articles (104) between various locations of a manufacturing facility is described. The rack system (100) includes a platform (106) having a plurality of engagement members (112) dispersed and arrayed uniformly across an expanse of the platform (106) and one or more modular stanchions (108). Each modular stanchion (108) of the one or more modular stanchions (108) includes a base (142) engageable with at least two engagement members (112) of the plurality of engagement members (112) for mounting and positioning the corresponding modular stanchion (108) at various locations across the expanse of the platform (106) and a surface (172) configured to seat a corresponding article (104) and being extendable and retractable with respect to the base (142).

## Description

### Technical Field

The present disclosure relates to a rack system. Particularly, the present disclosure relates to a rack system for supporting and transporting various articles between various locations of a manufacturing facility.

### Background

In various manufacturing environments, racks, which may include pallets, and the like devices, are employed to support and transport articles, such as machine parts, from one place to another. Such racks are often custom produced to support a specific article and are generally not interchangeable across multiple article types. When there is an increase in the manufacturing of a particular article, the quantity of the racks for transportation of the article is also generally required to be increased. However, when there is a decrease in the manufacturing of the particular article, the quantity of the racks for transportation of the article is also decreased, e.g., by scrapping those racks leading to wastage. Additionally, certain manufacturing practices may also require that such racks be scrapped owing to the introduction of new parts or products that need support and transportation.

United States Patent Publication No. 20050110204A1 discloses a reconfigurable pallet that supports a structure. The reconfigurable pallet includes a pallet base and at least one track formed in the pallet base. A plurality of modular stanchions are supported on the pallet base and slidably engage the track to selectively position the modular stanchions along x and y axes relative to a top surface of the pallet base. The modular stanchions each include a support element that has a height along a z axis that is transverse to the x and y axes, for supporting the structure.

### Summary

In an aspect, the present disclosure relates to a rack system for supporting and transporting various articles between various locations of a manufacturing facility. The rack system includes a platform having a plurality of engagement members dispersed and arrayed uniformly across an expanse of the platform and one or more modular stanchions. Each modular stanchion of the one or more modular stanchions includes a base engageable with at least two engagement members of the plurality of engagement members for mounting and positioning the corresponding modular stanchion at various locations across the expanse of the platform. Each modular stanchion further includes a surface configured to seat a corresponding article and being extendable and retractable with respect to the base.

### Brief Description

FIG. 1 is a perspective view of a rack system having a platform to support an article, in accordance with an embodiment of the present disclosure;
FIG. 2 is a perspective view of the platform, in accordance with an embodiment of the present disclosure;
FIG. 3 is a front perspective view of a modular stanchion of the rack system, in accordance with an embodiment of the present disclosure;
FIG. 4 is a rear perspective view of the modular stanchion of the rack system, in accordance with an embodiment of the present disclosure;
FIG. 5 illustrates an exemplary mechanism for adjusting height of the modular stanchion, in accordance with an embodiment of the present disclosure;
FIG. 6 is a view of a strapping system of the rack system, in accordance with an embodiment of the present disclosure; and
FIG. 7 is a view of the strapping system and the modular stanchions applied in conjunction with the platform to restrain and support the article with the platform, in accordance with an embodiment of the present disclosure.

### Detailed Description

Reference will now be made in detail to specific embodiments or features, examples of which are illustrated in the accompanying drawings. Wherever possible, the same reference numbers will be used throughout the drawings to refer to the same or the like parts.

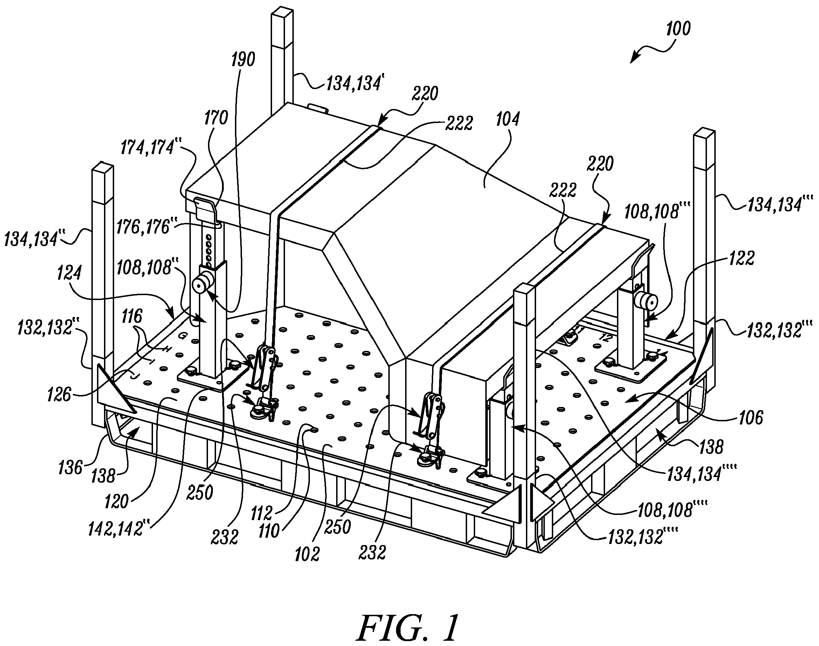

Referring to FIG. 1, an exemplary rack system 100 is shown. The rack system 100 may be utilized (or be adapted) to support and transport various articles (e.g., article 104) between various locations, such as, production lines, assembly lines, quality testing areas, storage areas, and shipping areas, of a manufacturing facility (not shown). The article 104 may include any part or an assembly of parts of any machine. As an example, the article 104 may include, but not limited to, an engine, a traction device, a chassis, chassis portions, a fender, hood, and/or the like parts, associated with a machine. The reference to the article 104 in the present disclosure may correspond to `multiple articles' and/or a `single article'. Also, the reference to the `article 104' in the present disclosure may correspond to `various articles', implying the adaptability of the rack system 100 to receive and support articles of varying sizes and dimensions. It will further be understood that the article 104 illustrated in the FIG. 1 and its corresponding description, as may be provided in the present disclosure, is purely exemplary. Although not limited, the manufacturing facility may correspond to one where products, such as construction machines, mining machines, work machines, at least in part or in full, are produced. The rack system 100 includes a platform 106 and one or more modular stanchions 108.

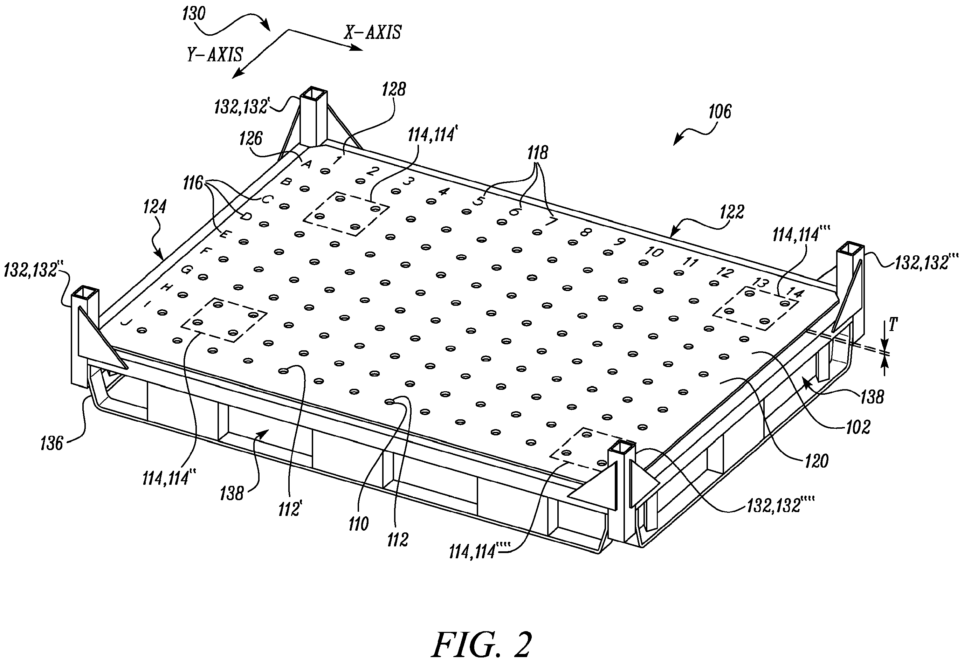

Referring to FIG. 2, the platform 106 of the rack system 100 is shown and discussed. The platform 106 may define a top surface 102 on which the article 104 may be placed. The platform 106 can be made of any material depending on the application and/or a requirement of the rack system 100. For example, in one preferred embodiment, the platform 106 can be made of a material exhibiting high strength properties to support a weight and bulk of the article 104, and may include, but not limited to, steel, alloy, etc., to support relatively heavy products like an engine or various other sub-assemblies of a machine. In some embodiments, the platform 106 can be made of wood, plastic, or composite materials.

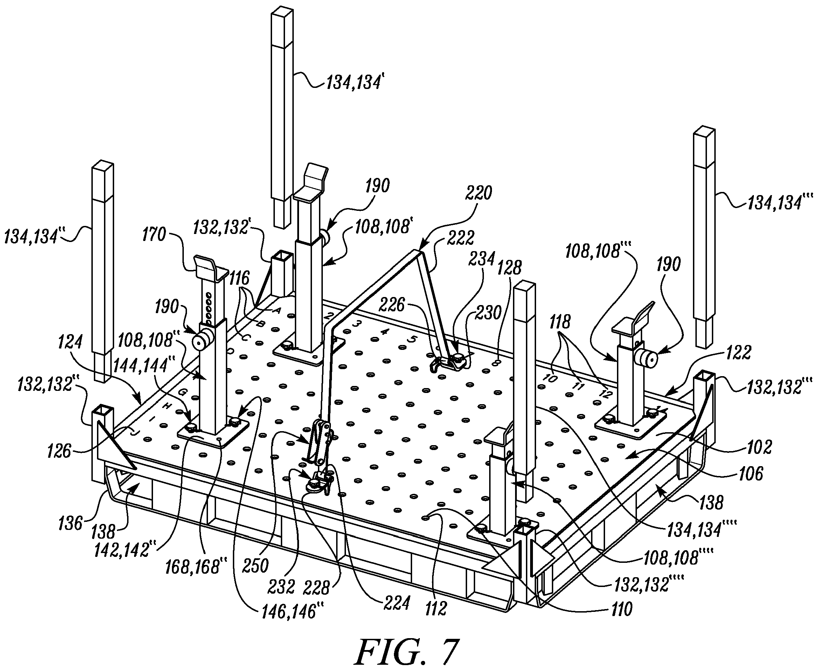

Further, the platform 106 includes a plurality of engagement members 112 dispersed and arrayed uniformly across an expanse of the platform 106. The engagement members 112 may correspond to holes 110 structured in the platform 106, to facilitate engagement of the modular stanchions 108 with the platform 106 (as shown in FIGs. 1 and 7). The engagement members 112 may be dispersed in a manner such that the engagement members 112 define identical patterns 114 of two or more engagement members 112 across the expanse of the platform 106. For example, FIG. 2 shows the identical patterns 114', 114", 114‴ and 114"" defined on the platform 106. Further, when the engagement members 112 include holes 110, the holes 110 may extend from the top surface 102 and extend into a body 120 of the platform 106. In some embodiments, the holes 110 may be through holes extending throughout a thickness, *T*, defined by the platform 106. In some embodiments, the holes 110 may include threadable portions to threadably engage with the modular stanchions 108.

As shown in FIG. 2, the engagement members 112 may be dispersed across the expanse of the platform 106 in a matrix formation and may include a coordinate system 130 defining multiple rows 116 and multiple columns 118. The coordinate system 130 may include two axes, namely an X-axis, and a Y-axis extending perpendicular to the X-axis. The X-axis may extend parallel to a first side 122 (e.g., a first longitudinal side 122) of the platform 106 and may define the columns 118 of the platform 106. The Y-axis may extend parallel to a second side 124 (e.g., a second longitudinal side 124) of the platform 106 and may define the rows 116 of the platform 106. As shown, each row 116 is identified by a unique row identifier 126, and may include one or more of an alphabet, a numeric value, and/or a special character, and each column 118 is identified by a unique column identifier 128, and may include one or more of another alphabet, a numeric value, and/or a special character. In so doing, each engagement member 112 may be identifiable (e.g., uniquely identifiable) by a concatenation of a corresponding column identifier 128 and a corresponding row identifier 126. For example, an engagement member 112' that lies in the J^{th} row and 5^{th} column may be identified as J5.

The platform 106 may further include one or more holders 132. The holders 132 may be correspondingly provided at the corners of the platform 106. As an example, the platform 106 may be rectangular shaped, and may accordingly define four corners at which, correspondingly, four holders 132 may be structured and arranged. The holders 132 may be designed to correspondingly receive beams or guard rails 134 (shown in FIGs. 1 and 7). As shown in FIG. 7, the guard rails 134 may be inserted into the holders 132 of the platform 106 and may be vertically aligned to provide protection to the article 104 against external collision. The guard rails 134 may also prevent the article 104 from falling out of the platform 106. For example, as shown in FIG. 7, the guard rails 134', 134", 134‴, 134ʺʺ are inserted and received in the respective holders 132', 132", 132‴, 132"" of the platform 106. In one preferred embodiment, the guard rails 134 may be made of any metallic material, such as, steel or an alloy, depending on the size and weight of the article 104. In some embodiments, the guard rails 134 can be made from other materials, such as wood, plastic, or composite materials.

As shown in FIG. 2, the platform 106 may further include a platform base 136 to support the platform 106. The platform base 136 may be engageable with a transport machine (not shown) such that the platform 106 (e.g., along with the article 104 mounted on the platform 106) may be transported by the transport machine to a desired location. The transport machine may include a forklift, pallet jack, and/or the like machine. As an example, the platform base 136 includes one or more openings 138 for receiving tongs or forks (not shown) of the transport machine, and which may be lifted above ground for raising the platform 106 above ground, thus enabling a transportation of the platform 106 and thus the article 104 to its desired location. Therefore, the openings 138 of the platform base 136 may be dimensioned to accommodate the tongs or the forks of the transport machine. Although not limited, the platform base 136 can be made of a metallic material, such as, steel or an alloy, or a non-metallic material, such as wood, plastic, or composite materials.

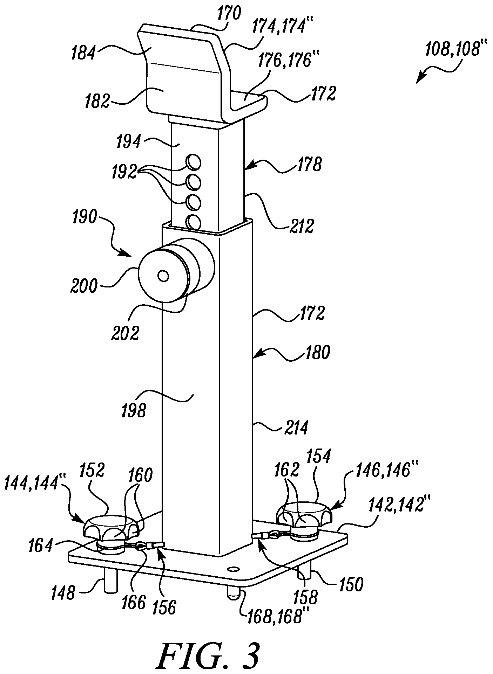

Referring to FIGs. 3 through 5, various parts and portions of the modular stanchion 108 of the rack system 100 are shown and discussed. The modular stanchions 108 may be engaged with the platform 106 and may be adjustable with respect to the platform 106 for seating the article 104 (i.e., articles of varying shapes and sizes) on the platform 106. A number of modular stanchions 108 provided are non-limiting and may vary from application to application. Details related to various parts and portions of the modular stanchions 108 and mechanisms that enable such adjustments shall be discussed in the forthcoming description.

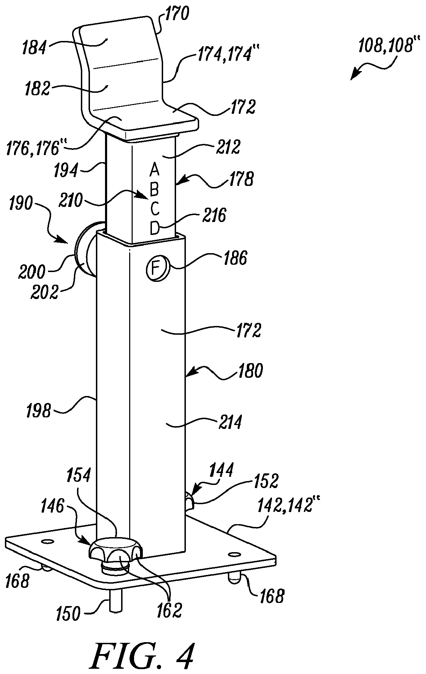

As shown in FIGs. 3 and 4, the modular stanchion 108 may include a base 142 that is engageable with at least two engagement members 112 of the platform 106. Given, the engagement members 112 are uniformly dispersed and arrayed on the platform 106, the engagement of the base 142 with any suitable group of engagement members 112 allows for a mounting and positioning of the modular stanchion 108 at various locations across the expanse of the platform 106 (i.e., as far as the engagement members 112 are dispersed or spread out on the platform 106, the modular stanchions 108 can be moved around the platform 106 for its placement on the platform 106). In accordance with various embodiments of the present disclosure, the base 142 is engageable (e.g., removably engageable) with the engagement members 112 according to the identical pattern 114 (shown in FIG. 2). The positioning of the base 142 with the engagement members 112 of the platform 106 may be determined based on and/or depend on the shape and/or dimensions of the article 104, thus making the rack system 100 modifiable to carry the article 104 (i.e., an article of different shapes and/or dimensions).

The modular stanchion 108 also includes at least two manually operated first fasteners 144, 146 to engage the base 142 with the engagement members 112 of the platform 106. To this end, the first fasteners 144, 146 may include respective shank portions 148, 150 that are sized to be received in the engagement members 112 of the platform 106. The shank portions 148, 150 of the respective first fasteners 144, 146 may extend through the base 142 of the modular stanchion 108, to engage the base 142 with the corresponding engagement members 112 of the platform 106. The first fasteners 144, 146 may include any suitable bolt, screw, etc. For example, as shown in FIG. 7, the base 142" of the modular stanchion 108" are engaged with the engagement members 112, identified by 'I2' and 'H3' of the identical pattern 114" (shown in FIG. 2) of the platform 106, using two manually operated first fasteners 144", 146".

As shown in FIG 3, the first fasteners 144, 146 may also include respective knobs 152, 154 that can be hand held to rotate and fasten/unfasten the base 142 from the platform 106. The knobs 152, 154 may include one or more gripping portions 160, 162 to maintain a secure hold of the knobs 152, 154, while manually fastening/unfastening the respective first fasteners 144, 146 from the platform 106. In some embodiments, the shank portions 148, 150 of the first fasteners 144, 146 are threadably engaged with the holes 110 of the platform 106 when the respective knobs 152, 154 are manually operated to fasten the base 142 with the platform 106.

As shown in FIGs. 3 and 4, the modular stanchion 108 includes a bracket 170 having a resting portion 174 and a supporting portion 176. The bracket 170 defines a surface 172. For example, the surface 172 is defined on the supporting portion 176 (and optionally also on the resting portion 174). The resting portion 174 defines a first part 182 and a second part 184. The first part 182 extends from the supporting portion 176 and the second part 184 extends from the first part 182 to an end of the resting portion 174. In some embodiments, the second part 184 is angled with respect to the first part 182 to help align and guide one or more portions of the article 104 onto the supporting portion 176 to be seated on the supporting portion 176. For example, as shown in FIG. 1, the resting portion 174" and the supporting portion 176" of the modular stanchion 108" are utilized to seat the article 104.

Further, the modular stanchion 108 may include at least one first sleeve 178 and at least one second sleeve 180. The first sleeve 178 may be coupled to the bracket 170, while the second sleeve 180 may be coupled to the base 142. The first sleeve 178 and the second sleeve 180 may also be telescopically movable with respect to each other such that the bracket 170 and/or the surface 172 is extendable and retractable with respect to the base 142 and so that a height of the surface 172 (and thus the corresponding modular stanchion 108) may be adjusted with respect to the base 142.

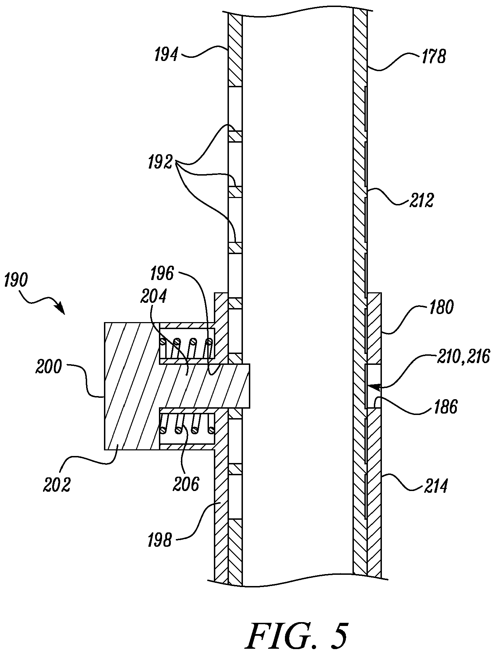

As shown in FIG. 5, the modular stanchion 108 may include an exemplary mechanism 190 to adjust the height of the modular stanchion 108 with respect to the platform 106. The mechanism 190 may include a plurality of spaced-apart first apertures 192 formed on a front side 194 of the first sleeve 178 and the same may be disposed along a length of the first sleeve 178, a pin 200, and a spring element 206. In accordance with various embodiments, the pin 200 is configured to be biased to a first state (e.g., see state of pin 200 in FIG. 5) with respect to a primary side 198 of the second sleeve 180. In the first state, the pin 200 selectively engages with the first apertures 192 to adjust the first sleeve 178 with respect to the second sleeve 180 to extend or retract the surface 172 with respect to the base 142. In some embodiments, the surface 172 may be optionally or additionally defined on the first sleeve 178 or the second sleeve 180, as well. In such cases, the first sleeve 178 and the second sleeve 180 of the modular stanchion 108 may be optionally or additionally utilized to seat the article 104 by providing support to one or more sides (e.g., one or more lateral sides or surfaces) of the article 104.

The pin 200 may include a knob portion 202 and a rod portion 204. The rod portion 204 of the pin 200 may be dimensioned to selectively slide into each one of the first apertures 192 formed in the first sleeve 178 via the second aperture 196 formed in the second sleeve 180. During a height adjustment of the modular stanchions 108 or when extending or retracting the surface 172 with respect to the base 142, the rod portion 204 of the pin 200 may be also configured to be removed from the first aperture 192 of the first sleeve 178 and re-inserted into another first aperture 192 of the first sleeve 178 so as to switch from one height of the corresponding modular stanchion 108 to another height of the corresponding modular stanchion 108. This is because the apertures 192 may be provided lengthwise on the first sleeve 178 (i.e., along a length of the first sleeve 178).

The spring element 206 may be inserted between the knob portion 202 and the primary side 198 of the second sleeve 180. The spring element 206 may be configured to mutually co-operate with the pin 200 and the first sleeve 178 such that in a free state of the spring element 206, the spring element 206 may bias the pin 200 in the first state for engagement with one of the first apertures 192 of the first sleeve 178. To this end, the spring element 206 provides a controlled amount of tension or force between the pin 200 and the second sleeve 180. Notably, a biasing force applied by the spring element 206 on the pin 200 keeps the pin 200 in engagement with the first sleeve 178. The tension of the spring element 206 may be sufficient to prevent inadvertent release (i.e., disengagement of the pin 200 and the first sleeve 178) due to vibrations, jolting, jarring, bouncing, bumping, and/or the like, that may occur during transportation of the article 104. As shown in FIG. 5, the spring element 206 is embodied in the form of a compression spring. However, other types of spring elements known in the art may be used in lieu of the compression spring shown in FIG. 5.

In some embodiments, the modular stanchion 108 may include a height reference system 210 for measuring the height of the modular stanchion 108, as shown in FIG. 4. The height reference system 210 may be used as a reference to adjust the first sleeve 178 with respect to the second sleeve 180. As shown in FIG. 4, the height reference system 210 includes reference characters 216, such as, alphabetic letters and/or the like, indicated on a rear side 212 of the first sleeve 178 (e.g., along a length of the first sleeve 178). The reference characters 216 may be indicated on specific positions or intervals of movement corresponding to the intervals between the first apertures 192 of the first sleeve 178 and may be viewed through a side opening 186 (see FIGs. 4 and 5) provided in the secondary side 214 of the second sleeve 180. In some embodiments, one or more parts of the modular stanchion 108, such as the base 142, first sleeve 178, and the second sleeve 180, and the one or more of the other parts described above, can be made of the same material as that of the platform 106 and/or the platform base 136.

In some embodiments, as shown in FIG. 3, the modular stanchion 108 includes first retainer members 156, 158 to correspondingly retain the first fasteners 144, 146 with the base 142. The first retainer members 156, 158 may be designed to fit around the knobs 152, 154 of the respective first fasteners 144, 146 and hold it securely in place against the base 142. The first retainer members 156, 158 may be designed in a variety of shapes and sizes to fit different types of first fasteners 144, 146 for coupling with the base 142. For example, as shown in FIG. 3, the first retainer member 156 may include a loop portion 164 that is designed to fit around the knob 152 of the first fastener 144. The first retainer member 156 further includes a cable portion 166 coupled to the loop portion 164 on one end and secured to the second sleeve 180 of the modular stanchion 108 on an opposite end. The loop portion 164 and the cable portion 166 may be made of the same or different material and may exemplarily include one or more of metal, plastic, fiber, or any similar material, to perform the functions described.

As shown in FIGs. 3 and 4, the base 142 of the modular stanchion 108 also includes one or more guides 168 to be aligned with at least two other engagement members 112 to be mated with the at least two other engagement members 112 of the platform 106. The two other engagement members 112 may be a part of each of the identical patterns 114 (shown in FIG. 2). For example, as shown in FIG. 7, the guide 168" of the base 142" of the modular stanchion 108" is mated with the engagement member 112 identified by '13' of the identical pattern 114" of the platform 106.

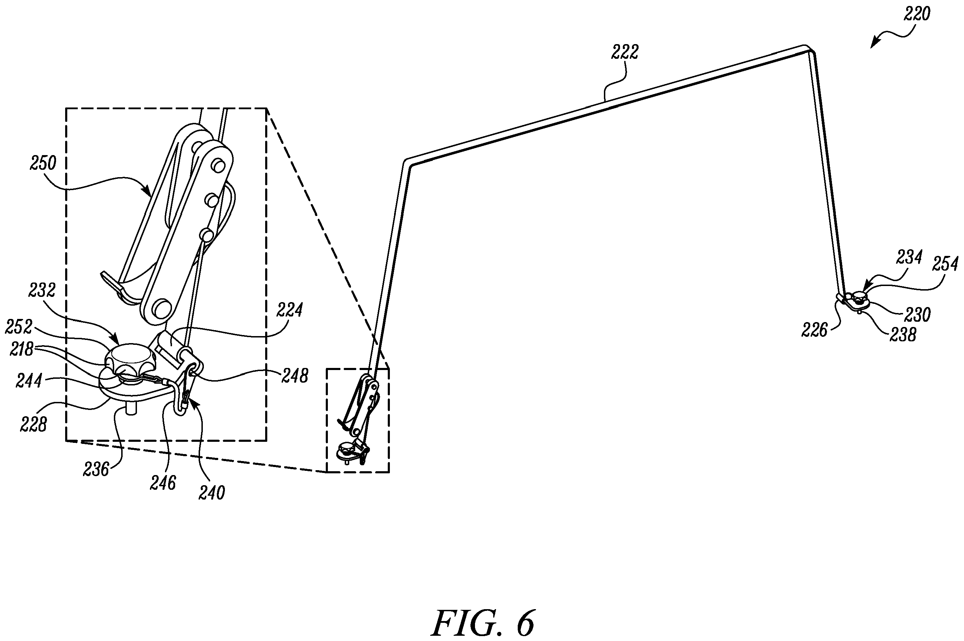

Referring to FIG. 6, the strapping system 220 of the rack system 100 is shown. One or more strapping systems 220 are utilized to secure the article 104 to the platform 106 of the rack system 100 (as shown in FIG. 1). To this end, each strapping system 220 may include a strap 222 and end plates 228, 230.

The strap 222 may define a first end 224 and a second end 226. The strap 222 may be made of any flexible (but a strong) material, such as, polyester, steel, and the like. Although not limited, the strap 222 may also have elastic properties. In use with the platform 106 to support the article 104, the strap 222 may be wrapped around the article 104 to restrain (e.g., tightly restrain) the article's movement with respect to the platform 106 such that the article cannot fall off the platform during transportation.

The end plates 228, 230 may be correspondingly disposed at the ends 224, 226 of the strap 222, for example, a first end plate 228 is disposed at the first end 224 and a second end plate 230 is disposed at the second end 226 of the strap 222. The strapping system 220 further includes at least two manually operated second fasteners 232, 234 to correspondingly retain the first end plate 228 and the second end plate 230 with corresponding engagement members 112 of the platform 106. To this end, the second fasteners 232, 234 may include respective shank portions 236, 238 that are sized to be received in the engagement members 112 of the platform 106. The shank portions 236, 238 of the respective second fasteners 232, 234 may extend through the respective first end plate 228 and the second end plate 230 of the strapping system 220, to engage the respective first end plate 228 and the second end plate 230 with the corresponding engagement members 112 of the platform 106. The second fasteners 232, 234 may include any suitable bolt, screw, etc. For example, as shown in FIG. 7, the second end plate 230 of the strapping system 220 is engaged with the engagement members 112 identified by A7 of the platform 106, using the manually operated second fastener 234.

The second fasteners 232, 234 may also include respective knobs 252, 254 that can be hand held to rotate and fasten/unfasten the first end plate 228 and the second end plate 230 from the corresponding engagement members 112 of the platform 106. For example, the knob 252 may include one or more gripping portions 218 to maintain a secure hold of the knob 252 while manually fastening/unfastening the second fastener 232 from the platform 106. In some embodiments, the shank portion 236 of the second fastener 232 is threadably engaged with the holes 110 of the platform 106 when the knob 252 is manually operated to fasten the first end plate 228 with the platform 106.

As shown in FIG. 6, the strapping system 220 includes second retainer member 240 to retain the second fastener 232 with the first end plate 228. The second retainer member 240 may be designed to fit around the knob 252 of the second fastener 232 and hold it securely in place against the first end plate 228. The second retainer member 240 may be designed in a variety of shapes and sizes to fit different types of second fastener 232 for coupling with the first end plate 228. For example, the retainer member 240 may include a loop portion 244 that is designed to fit around the knob 252 of the second fastener 232. The retainer member 240 further includes a latch portion 246 coupled to the loop portion 244 on one end and secured to the first end plate 228, via a latch receiving slot 248, on an opposite end. The loop portion 244 and the latch portion 246 may be made of the same or different material, including metal, plastic, fiber, or any similar material to perform the functions described. The strapping system 220 may include one or more additional second retainer members similar to the second retainer member 240 to retain the second fastener 234 with the second end plate 230.

The strapping system 220 may further include at least one tensioning mechanism 250 for adjusting a tension of the strap 222 of the strapping system 220 for securing the article 104. The tensioning mechanism 250 of the strapping system 220 may function in a known manner and the details of which are not described herein, for the sake of brevity of the disclosure.

### Industrial Applicability

The rack system 100 of the present disclosure, having the multiple engagement members 112 dispersed and arrayed uniformly across the expanse of the platform 106, allows easy customization to support and transport the article 104 (i.e., articles of varying sizes and dimensions) to desired locations. The engagement members 112 dispersed across the expanse of the platform 106 provide the flexibility to mount and position one or more modular stanchions 108 at various locations on the platform 106. Depending upon the dimensions of the article 104 to be supported by the rack system 100, the modular stanchions 108 are suitably and modularly mounted and positioned on the platform 106 for supporting the article 104 on the platform 106.

For example, as shown in FIG. 7, the modular stanchions 108', 108", 108"', 108"" are mounted and positioned on the platform 106 at the desired locations. In order to mount and position the modular stanchion 108 on the platform 106, the first fasteners 144, 146 and the one or more guides 168 provided on the base 142 of the modular stanchion 108 may be engaged with the corresponding engagement members 112 of the platform 106. The height of each modular stanchion 108 may be adjusted to achieve a desired height by removing the rod portion 204 of the pin 200 from the first apertures 192 of the first sleeve 178, moving the first sleeve 178 with respect to the second sleeve 180, and at the desired height re-inserting the rod portion 204 of the pin 200 into a corresponding first aperture 192 of the first sleeve 178, as shown in FIGs. 3-5. As shown in FIG. 7, different modular stanchions 108', 108", 108"', 108"" can be adjusted to different heights, to meet the seating requirements of the article 104. If additional or lesser modular stanchions 108 are needed to support the article 104, the number of the modular stanchions 108 can be varied accordingly.

Upon mounting and positioning the modular stanchions 108 with the desired heights, the article 104 is brought forth and then seated on the surfaces 172 defined by the modular stanchion 108 of the platform 106. Further, the article 104 is secured with the strapping system 220. In order to secure the article 104 with the strapping system 220, the first end plate 228 and the second end plate 230 disposed at the respective first end 224 and the second end 226 of the strap 222 are engaged with another set of one or more engagement members 112 of the platform 106, as shown in FIG. 7. A tension of the strap 222 is then adjusted for securing the article 104 using the tensioning mechanism 250. In some embodiments, the guard rails 134', 134", 134‴, 134ʺʺ are inserted in the respective holders 132', 132", 132‴, 132ʺʺ of the platform 106 to protect the article 104 from external collision and/or fall off.

With the modular functionality offered by the rack system 100, a decrease in demand for one article 104 and/or an increase in demand for another article 104, does not necessitate a discarding of the rack system 100. Rather, with the multiple engagement members 112 and the modular stanchions 108, the rack system 100 can easily be reconfigured and transformed into a rack system 100 than can support and transport the new article 104, and thus multiple other articles 104, in turn easing inventory management and associated labor. For example, the rack system 100 can be easily reconfigured by disengaging the modular stanchions 108 and the strapping system 220 from the engagement members 112 of the platform 106 and re-positioning the modular stanchions 108 and the strapping system 220 on the platform 106 as per the shape and dimensions of the new article. The identical patterns 114 of two or more engagement members 112 enable the modular stanchions 108 to be placed anywhere across the expanse of the platform 106 according to the identical pattern 114. Also, the unique row identifier 126 and the unique column identifier 128 of the platform 106 makes it easy to identify the engagement members 112 to be used for mounting the modular stanchions 108 and the height reference system 210 assists in achieving the desired heights of the modular stanchions 108. Effectively, the rack system 100 is adapted to support various articles 104 of different sizes and dimensions by adjusting the positioning and height of the modular stanchions 108 on the platform 106. Moreover, the manual operations associated with disengaging the modular stanchions 108 and the strapping system 220 from the engagement members 112 of the platform 106 and re-positioning the modular stanchions 108 and the strapping system 220 enable the rack system 100 to be used with less or no tooling.

It will be apparent to those skilled in the art that various modifications and variations can be made to the method and/or system of the present disclosure without departing from the scope of the disclosure. Other embodiments will be apparent to those skilled in the art from consideration of the specification and practice of the method and/or system disclosed herein. It is intended that the specification and examples be considered as exemplary only, with a true scope of the disclosure being indicated by the following claims and their equivalent.

## Claims

1. A rack system (100) for supporting and transporting various articles (104) between various locations of a manufacturing facility, the rack system (100) comprising:
a platform (106) having a plurality of engagement members (112) dispersed and arrayed uniformly across an expanse of the platform (106); and
one or more modular stanchions (108), each modular stanchion (108) of the one or more modular stanchions (108) including:
a base (142) engageable with at least two engagement members (112) of the plurality of engagement members (112) for mounting and positioning the corresponding modular stanchion (108) at various locations across the expanse of the platform (106); and
a surface (172) configured to seat a corresponding article (104) and being extendable and retractable with respect to the base (142).

2. The rack system (100) of claim 1, wherein each modular stanchion (108) includes at least one first sleeve (178) and at least one second sleeve (180), the at least one first sleeve (178) and the at least one second sleeve (180) being telescopically movable with respect to each other such that the surface (172) is extendable and retractable with respect to the base (142).

3. The rack system (100) of claim 2, wherein the modular stanchion (108) further includes a mechanism (190) to adjust the height of the modular stanchions (108), wherein the mechanism (190) includes:
apertures (192) formed in the at least one first sleeve (178); and
a pin (200) configured to be biased to a first state with respect to the at least one second sleeve (180), wherein in the first state, the pin (200) selectively engages with the apertures (192) to adjust the at least one first sleeve (178) with respect to the at least one second sleeve (180) to extend or retract the surface (172) with respect to the base (142).

4. The rack system (100) of claim 1, wherein each modular stanchion (108) includes at least two manually operated first fasteners (144, 146) to engage the base (142) with the at least two engagement members (112).

5. The rack system (100) of claim 4, wherein each modular stanchion (108) includes first retainer members (156, 158) to correspondingly retain the at least two manually operated first fasteners (144, 146) with the base (142).

6. The rack system (100) of claim 1, wherein the plurality of engagement members (112) define identical patterns (114) of two or more engagement members (112) of the plurality of engagement members (112) across the expanse, and wherein the at least two engagement members (112) are engageable with the base (142) according to the identical pattern (114).

7. The rack system (100) of claim 6, wherein the at least two engagement members (112) correspond to at least two first engagement members (112), the base (142) including one or more guides (168) to be aligned with at least two second engagement members (112) to be mated with the at least two second engagement members (112), wherein the at least two second engagement members (112) are part of each of the identical patterns (114).

8. The rack system (100) of claim 1, wherein the plurality of engagement members (112) are dispersed across the expanse of the platform (106) in a matrix formation defining a plurality of rows (116) and a plurality of columns (118), each row of the plurality of rows (116) being identified by a unique row identifier (126) and each column of the plurality of columns (118) being identified by a unique column identifier (128) such that each engagement member (112) of the plurality of engagement members (112) is identifiable by a concatenation of a corresponding column identifier (128) and a corresponding row identifier (126).

9. The rack system (100) of claim 1, wherein each modular stanchion (108) includes a resting portion (174) and a supporting portion (176), the resting portion (174) defines a first part (182) and a second part (184), the first part (182) extends from the supporting portion (176) and the second part (184) extends from the first part (182) to an end of the resting portion (174), wherein the second part (184) is angled with respect to the first part (182).

10. The rack system (100) of claim 1, further includes a strapping system (220) for securing the various articles (104) to the platform (106).

11. The rack system (100) of claim 10, wherein the strapping system (220) includes at least one tensioning mechanism (250) for adjusting a tension of the strapping system (220) for securing the various articles (104).

12. The rack system (100) of claim 10, wherein the strapping system (220) includes a strap (222) defining a first end (224) and a second end (226), a first end plate (228) being disposed at the first end (224) and a second end plate (230) being disposed at the second end (226), at least two manually operated second fasteners (232, 234) to correspondingly retain the first end plate (228) and the second end plate (230) with corresponding engagement members (112) of the plurality of engagement members (112).

13. The rack system (100) of claim 12, wherein the strapping system (220) includes second retainer members (240) to correspondingly retain the at least two second fasteners (232, 234) correspondingly with the first end plate (228) and the second end plate (230).

14. The rack system (100) of claim 1, wherein the plurality of engagement members (112) correspond to a plurality of holes (110) structured in the platform (106).

15. The rack system (100) of claim 1, wherein the platform (106) is a steel platform.
